# EUROPÄISCHE PATENTSCHRIFT

(11) **EP 1 879 678 B1**
(45) Veröffentlichungstag und Bekanntmachung des Hinweises auf die Patenterteilung: **04.08.2010**
(21) Anmeldenummer: 06763123.4
(22) Anmeldetag: 12.05.2006
(51) Int. Cl.: B01D 27/10, B01D 35/147, B01D 35/153, B01D 35/30

(54) **FILTEREINRICHTUNG, INSBESONDERE ZUR FLÜSSIGKEITSFILTERUNG IN BRENNKRAFTMASCHINEN**
FILTERING SYSTEM, IN PARTICULAR FOR FILTERING LIQUIDS IN INTERNAL COMBUSTION ENGINES
DISPOSITIF FILTRANT DESTINE, EN PARTICULIER A FILTRER UN LIQUIDE DANS DES MOTEURS A COMBUSTION INTERNE

(30) Priorität: 13.05.2005 DE 202005007871 U
(43) Veröffentlichungstag der Anmeldung: 23.01.2008
(73) Patentinhaber: MANN + HUMMEL GMBH, 71638 Ludwigsburg (DE)
(72) Erfinder: KOLCZYK, Markus, 74395 Mundelsheim (DE); AMESÖDER, Dieter, 74321 Bietigheim-Bissingen (DE); EPLI, Sven, 74078 Heilbronn (DE); BAUER, Sascha, 71549 Auenwald (DE); THIENEL, Michael, 95359 Kasendorf (DE); LOOS, Rainer, 71691 Freiberg (DE); WEIN, Michael, 70376 Stuttgart (DE); FRITZ, Luiz Carlos, Umuarama, Indiatuba, CEP 13343-824 São Paulo (BR); SCHRECKENBERGER, Dieter, 71672 Marbach (DE); WOITOLL, Marco, 71701 Schwieberdingen (DE)
(86) Internationale Anmeldenummer: PCT/EP2006/062267
(87) Internationale Veröffentlichungsnummer: WO 2006/120243

(56) Entgegenhaltungen:
- WO-A-97/44113
- DE-U1- 8 210 287
- GB-A- 2 333 245
- US-A- 5 858 227

## Beschreibung

Die Erfindung bezieht sich auf eine Filtereinrichtung, insbesondere zur Flüssigkeitsfilterung in Brennkraftmaschinen, nach dem Oberbegriff des Anspruches 1.

Derartige Filtereinrichtungen werden in Brennkraftmaschinen zur Filterung von Öl oder Kraftstoff eingesetzt und umfassen ein radial von außen nach innen zu durchströmendes, hohlzylindrisches Filterelement, welches in ein Filtergehäuse der Filtereinrichtung eingesetzt ist. Die zu reinigende Flüssigkeit wird über einen Zulauf in das Filtergehäuse in den Bereich der die Rohseite bildenden Außenseite des Filterelementes eingeleitet und nach der Filterung axial über den zentralen Hohlraum des Filterelementes wieder abgeleitet. Das Filtergehäuse ist zur Aufnahme des Filterelementes etwa topfförmig ausgebildet und wird nach dem Einsetzen des Filterelementes von einer Deckelscheibe verschlossen. Diese Deckelscheibe ist üblicherweise aus Metall gefertigt, um die notwendige Stabilität zu gewährleisten.

Aus der US 5,858,227 ist ein Kraftstofffilter bekannt mit einem hohlzylindrischen Filterelement in einem Filtergehäuse, welches von einer Deckelscheibe zu verschließen ist. Die Deckelscheibe weist eine äußere Einzelscheibe auf, die über einen Verbindungsabschnitt mit einer inneren Einzelscheibe verbunden ist, welche die Endscheibe des Filterelementes bildet. In die innere Einzelscheibe ist ein Strömungsstutzen eingebracht, der mit der Reinseite des Filterelementes kommuniziert und das gereinigte Fluid in den Zwischenraum zwischen den beiden Einzelscheiben leitet, aus dem das gereinigte Fluid radial abzuleiten ist. Die Strömungszufuhr des Rohfluids erfolgt über einen radialen Strömungsstutzen in der Gehäusewand des Gehäuses. Die Ableitung erfolgt zunächst axial über einen Strömungsstutzen in der dem Filterelement zugewandten Scheibe in den Zwischenraum zwischen beiden Scheiben, anschließend findet eine Strömungsumleitung in Radialrichtung zur Ableitung aus dem Gehäuse über einen Radialstutzen stattfindet. Bei der US 5,858,227 ist demnach eine mehrfache Strömungsumleitung erforderlich. Die sich an der Außenwand des Gehäuses radial erstreckenden Einfüllstutzen und Ableitungsstutzen vergrößern außerdem den radialen Einbauraum.

Aus der DE 82 10 287 U ist eine Filtereinrichtung bekannt, die als Kaffeefilter ausgestaltet ist, bei dem unter Ausnutzung der Gewichtskraft des Wassers ein Strömungsfluss von oben nach unten erzeugt wird. Die Filtereinrichtung weist ein Gehäuse mit darin aufgenommenem Filterelement auf, wobei ein oberes Gehäuseteil von einer Deckelscheibe verschlossen ist, die aus einer oberen Scheibe und einer unteren Scheibe besteht, und die beiden Scheiben über einen Strömungsstutzen miteinander verbunden sind. Die Zufuhr des Wassers erfolgt über den zentralen Strömungsstutzen der Deckelscheibe, der als Einfüllöffnung fungiert. In die Seitenwand der Einfüllöffnung sind Durchflusskanäle eingebracht, über die das Fluid radial aus der Einfüllöffnung in den Zwischenraum zwischen den Einzelscheiben strömt, wobei im weiteren Verlauf die Flüssigkeit über den äußeren Rand der unteren Scheibe nach unten abtropft. Nach dem Durchströmen des Filterelementes wird die gereinigte Flüssigkeit axial nach unten über Abströmöffnungen in einer Bodenplatte abgeführt.

Der Erfindung liegt das Problem zugrunde, eine gattungsgemäße Filtereinrichtung kompakt bauend und stabil bei zugleich geringem Gewicht auszubilden. Die Filtereinrichtung soll zweckmäßig mit geringem Aufwand entsorgt werden können.

Dieses Problem wird erfindungsgemäß mit den Merkmalen des Anspruches 1 gelöst. Die Unteransprüche geben zweckmäßige Weiterbildungen an.

Die erfindungsgemäße Filtereinrichtung, welche insbesondere zur Flüssigkeitsfilterung beispielsweise von Öl oder von Kraftstoff in Brennkraftmaschinen eingesetzt wird, besitzt eine auf das Filtergehäuse aufzusetzende Deckelscheibe, die aus zwei parallelen Einzelscheiben besteht, welche über einen zentralen Strömungsstutzen verbunden sind, wobei die beiden Einzelscheiben und der Strömungsstutzen ein gemeinsames Kunststoffbauteil bilden. Die doppelscheibige Ausführung der Deckelscheibe aus Kunststoff besitzt den Vorteil, dass im Vergleich zu Ausführungen aus dem Stand der Technik eine zumindest gleich hohe Stabilität bei geringem Gewicht gewährleistet ist, wobei zugleich die Recyclingfähigkeit erheblich verbessert ist, da nunmehr auch die Deckelscheibe vollständig aus Kunststoff besteht und gemeinsam mit dem üblicherweise ebenfalls aus Kunststoff bestehenden Filtergehäuse nach Gebrauch ohne signifikante Umweltbelastung einer Verbrennung zugeführt und hierbei verascht werden kann. Die zweiteilige Deckelscheibe lässt sich beispielsweise als Spritzgussbauteil in einfacher Weise herstellen, wobei aber auch andere Herstellungsverfahren für Kunststoffbauteile wie zum Beispiel Tiefziehen in Betracht kommen. Gegebenenfalls kann die aus Kunststoff gefertigte Deckelscheibe auch in Kombination mit einem Metalltopf verwendet werden.

Dem hohlzylindrischen Strömungsstutzen in der Deckelscheibe kommt eine Doppelfunktion zu: zum einen verbindet der Strömungstutzen die beiden Einzelscheiben miteinander, zum anderen kann über den Innenraum des Strömungsstutzens die Flüssigkeit in das Filtergehäuse eingeführt bzw. aus diesem abgeleitet werden. Der Strömungsstutzen kann darüber hinaus gemäß einer vorteilhaften Ausführung mit einem Innengewinde versehen sein, über das die Deckelscheibe bzw. die gesamte Filtereinrichtung an ein Bauteil der Brennkraftmaschine angeschlossen werden kann. Gegebenenfalls kommt auch ein Außengewinde in Betracht, über das die Verbindung zwischen dem Filter und beispielsweise einem Motorflansch hergestellt werden kann. Ein derartiges Außengewinde kann auch aus einem separaten Insert im Deckel bestehen, das vorzugsweise als Strömungsstutzen eingespritzt ist bzw. eingeklipst werden kann.

Der Strömungsstutzen zwischen den Einzelscheiben kann einen verhältnismäßig großen Durchmesser aufweisen, wodurch einerseits der Strömungsfluss durch den Strömungsstutzen erleichtert und andererseits die Stabilität der Deckelscheibe erhöht wird. Zusätzlich zum Strömungsstutzen können aber auch radial weiter außen liegende, die beiden Einzelscheiben verbindende Verbindungsstege vorgesehen sein, wodurch die Steifigkeit der Deckelscheibe erheblich gesteigert wird. Die Verbindungsstege sind ebenfalls einteilig mit der Deckelscheibe ausgebildet.

Gemäß einer bevorzugten Ausführung bildet eine der Einzelscheiben eine unmittelbar auf der Stirnseite des Filterelements aufsitzende Stirnscheibe, welche fest mit der Stirnseite verbunden sein kann, beispielsweise mittels Verschweißens oder Verklebens. Die die Stirnscheibe bildende Einzelscheibe sorgt für eine strömungstechnische Trennung von Roh- und Reinseite des Filterelementes und verbessert die Stabilität des Filterelementes.

Üblicherweise bildet der zentrale Strömungsstutzen, welche die beiden Einzelscheiben der Deckelscheibe verbindet, den Abströmstutzen, über den die gereinigte Flüssigkeit aus dem die Reinseite bildenden Innenraum des Filterelementes axial abgeführt wird. Die Zufuhr der ungereinigten Flüssigkeit erfolgt zweckmäßig ebenfalls über die Deckelscheibe, die zu diesem Zweck in der dem Filterelement abgewandten, außen liegenden Einzelscheibe mindestens ein in Richtung des Filterelementes öffnendes Rücklaufsperrventil aufweist, über das die zu reinigende Flüssigkeit in die Filtereinrichtung eingeführt wird. Dieses Rücklaufsperrventil befindet sich so lange in Öffnungsstellung, wie der Druck der Flüssigkeit auf der Rohseite in der Filtereinrichtung geringer ist als der Druck, unter dem die Flüssigkeit in die Filtereinrichtung eingeleitet wird. Das Rücklaufsperrventil verhindert beim Ausbau des Filterelements über Kopf ein Auslaufen der Flüssigkeit bzw. bei abgestelltem Motor ein Leerlaufen des Filters.

Dieses Rücklaufsperrventil kann in einer einfachen Ausführung als Schnabelventil ausgeführt sein, welches auf Druckunterschiede auf der Einström- und Ausströmseite des Ventils reagiert und selbsttätig in Sperrstellung versetzt wird, wenn der Druck auf der Ausströmseite einen Grenzwert übersteigt.

Die dem Filterelement benachbarte Einzelscheibe der Deckelscheibe weist zweckmäßig sich in Umfangsrichtung erstreckende Langlöcher auf, über die die über das Rücklaufsperrventil in der äußeren Einzelscheibe eingeführte Flüssigkeit aus dem Zwischenraum zwischen beiden Einzelscheiben auf die Rohseite des Filterelementes strömen kann. Der die Langlöcher begrenzende, äußere Rand der Einzelscheibe stützt sich an der inneren Mantelfläche des Filtergehäuses ab, was ebenfalls zur Verbesserung der Stabilität beiträgt. Gegebenenfalls ist der äußere Rand auch mit der Mantelfläche verschweißt, verklebt oder in sonstiger Weise verbunden.

Alternativ zu den sich in Umfangsrichtung erstreckenden Langlöchern kann der Randbereich der dem Filterelement unmittelbar benachbarten Einzelscheibe radial vorspringende Rippen mit zwischen liegenden, radial zurückgesetzten Ausnehmungen aufweisen, über die ein Durchfluss der zugeführten Flüssigkeit auf die Rohseite des Filterelementes möglich ist. Die vorspringenden Rippen stützen sich an der inneren Mantelfläche des Filtergehäuses ab.

In die auf der axialen Stirnseite des Filterelementes aufsitzenden Stirnscheibe - bei der es sich bevorzugt um eine der Einzelscheiben der Deckelscheibe handelt - kann eine Überströmöffnung eingebracht sein, über die die Rohseite unmittelbar mit der Reinseite des Filterelements kommuniziert. Die Überströmöffnung wird von einem Überströmventil verschlossen, welches unter Normalbedingungen in Schließstellung steht, um die Rohseite von der Reinseite zu separieren. Übersteigt der Druck auf der Rohseite einen Grenzwert, beispielsweise als Folge eines verstopfenden Filterelementes, so öffnet das Überströmventil, und der Überdruck auf der Rohseite wird durch ein direktes Überströmen der Flüssigkeit von der Roh- auf die Reinseite abgebaut. Nach dem Abbau des Überdrucks wird das Überströmventil selbsttätig wieder in die Schließposition verstellt.

Das Anschluss-Innengewinde im zentralen Strömungsstutzen, über den die Filtereinrichtung an ein Bauteil der Brennkraftmaschine oder einer sonstigen Maschine angeschlossen wird, besitzt zweckmäßig keine herkömmliche Sägezahngeometrie, sondern eine elliptische Geometrie, wodurch die Spannungsbelastung im Gewinde deutlich reduziert wird. Dadurch ist es möglich, trotz Verwendung von Kunststoff für die Deckelscheibe verhältnismäßig hohe Kräfte über das Gewinde im Strömungsstutzen einzuleiten, sodass insbesondere das Eigengewicht der Filtereinrichtung von dem Innengewinde getragen werden kann.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine Filtereinrichtung zur Flüssigkeitsfilterung in Brennkraftmaschinen, mit einem topfförmigen Filtergehäuse, einem in das Filtergehäuse eingesetzten, hohlzylindrischen Filterelement und ei- ner zweiteiligen Deckelscheibe mit zwei über einen Strömungsstutzen verbundenen Einzelscheiben,
- Fig. 2: die Filtereinrichtung in einer perspektivischen Ansicht im Teilschnitt,
- Fig. 3: die Deckelscheibe in einer perspektivischen Ansicht im Teilschnitt,
- Fig. 4: einen Ausschnitt im Bereich des Innengewindes im Strömungsstutzen, mit eingetragener elliptischer Geometrie des Gewindes,
- Fig. 5: eine Filtereinrichtung in einer weiteren Ausführung, dargestellt im Teil- schnitt,
- Fig. 6: eine Ansicht von oben auf die Filtereinrichtung nach Fig. 5,
- Fig. 7: eine Ausschnittvergrößerung des Details VII aus Fig. 5,
- Fig. 8: ein als Schnabelventil ausgeführtes Überströmventil in perspektivischer Ansicht,
- Fig. 9: das Schnabelventil in einer Ansicht von unten,
- Fig. 10: eine perspektivische Ansicht auf einen Stützkörper für ein hohlzylindri- sches Filterelement, der einenends auf eine untere Endscheibe aufge- setzt ist, wobei auf der Endscheibe ein Aufnahme- bzw. Befestigungs- stutzen ausgebildet ist, um den ein als Überströmventil fungierender Dichtungsschlauch gelegt ist,
- Fig. 11: die untere Endscheibe in perspektivischer Einzeldarstellung,
- Fig. 12: der Stützkörper einschließlich unterer Endscheibe im Schnitt,
- Fig. 13a: eine perspektivische Ansicht auf den Stützkörper und die untere End- scheibe im Teilschnitt, mit einem Überströmventil in einer alternativen Ausführung,
- Fig. 13b: eine Ansicht auf einen ähnlichen Gegenstand wie in Fig. 13a darge- stellt, jedoch mit einem Überströmventil in einer weiteren Ausführung,
- Fig. 14a,: b ein Überström- bzw. Bypassventil, welches zwischen Roh- und Reinsei- te des Filterelementes zum Einsatz kommt und als Ventilkörper einen Elastomerblock aufweist, der elastisch zusammengedrückt werden kann, dargestellt in Schließposition (Fig. 14a) und Öffnungsposition (Fig. 14b),
- Fig. 15a,: b ein Überström- bzw. Bypassventil mit einem Elastomer-Balg als Ventil- körper,
- Fig. 16a,: b ein Überström- bzw. Bypassventil mit einem Schaumstoffblock als Ven- tilkörper,
- Fig. 17: eine perspektivische Ansicht einer Filtereinrichtung mit einem zylindri- schen Filtergehäuse und einem darin eingesetzten ringförmigen Filter- element, dem über ein Rücklaufsperrventil die zu filtrierende Flüssigkeit zuführbar ist,
- Fig. 18: einen Längsschnitt durch die Filtereinrichtung nach Fig. 17 einschließ- lich stirnseitig eingesetzter Anschlussringe,
- Fig. 19: die Anschlussringe in Einzeldarstellung,
- Fig. 20: eine vergrößerte Darstellung der Filtereinrichtung aus Fig. 17 mit dem als Schlauchventil ausgeführten Rücklaufsperrventil in Sperrstellung,
- Fig. 21: eine Fig. 20 entsprechende Darstellung, jedoch mit dem Schlauchventil in geöffneter Stellung,
- Fig. 22: eine perspektivische Ansicht einer weiteren Filtereinrichtung, die eine Deckelscheibe mit radial verlaufenden Speichen aufweist.
- Fig. 23: eine perspektivische Ansicht noch einer weiteren Filtereinrichtung, die ein Überströmventil zwischen Roh- und Reinseite aufweist, welches mit axial überstehenden Stützfüßen versehen ist,
- Fig. 24: das Überströmventil aus Fig. 23 in Einzeldarstellung,
- Fig. 25: ein Stützring zur Befestigung an der axialen Stirnseite an dem Über- strömventil,
- Fig. 26: ein Überströmventil im topfförmigen Filtergehäuse mit einem am Boden des Gehäuses angeordneten Dorn, der in eine vom Ventilgehäuse be- grenzte Ausnehmung im Überströmventil einragt,
- Fig. 27: ein Filterelement in Draufsicht,
- Fig. 28: das Filterelement gemäß Fig. 27 in Seitenansicht,
- Fig. 29: einen Ausschnitt aus dem Filtergehäuse in perspektivischer Darstellung und
- Fig. 30: das Filterelement in montiertem Zustand in dem Filtergehäuse.

In den Figuren sind gleiche Bauteile mit gleichen Bezugszeichen versehen.

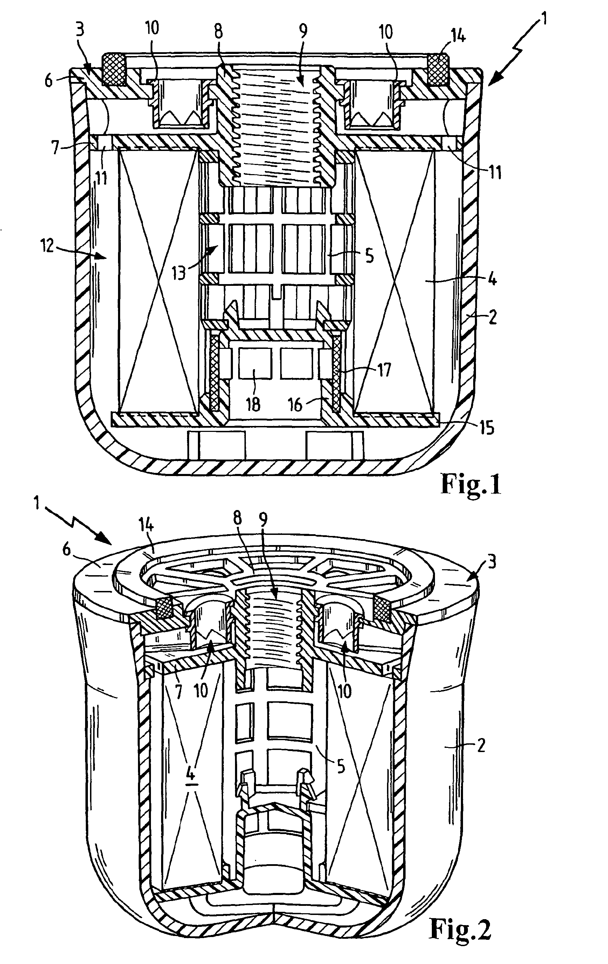

Die in den Fig. 1 und 2 dargestellte Filtereinrichtung 1 wird insbesondere in Brennkraftmaschinen zur Filterung von Flüssigkeiten wie Öl oder Kraftstoff eingesetzt. Die Filtereinrichtung 1 umfasst ein Kunststoff-Filtergehäuse 2, welches etwa topfförmig ausgebildet ist und von einer Deckelscheibe 3 zu verschließen ist. In den Aufnahmeraum im Filtergehäuse 2 ist ein Filterelement 4 eingesetzt, welches hohlzylindrisch ausgebildet ist und von einem zentralen, im Innenraum des Filterelementes 4 angeordneten Stützkörper 5 aus Kunststoff getragen ist. Das Filterelement 4 wird radial von außen nach innen durchströmt, sodass die Außenseite des Filterelementes 4 die Rohseite 12 und der Innenraum im Filterelement die Reinseite 13 bildet.

Die Deckelscheibe 3 ist vollständig aus Kunststoff hergestellt und umfasst zwei Einzelscheiben 6 und 7, die parallel zueinander liegen und näherungsweise den gleichen Radius aufweisen und über einen zentralen, hohlzylindrischen Strömungsstutzen 8 miteinander verbunden sind. Die beiden Einzelscheiben 6 und 7 sowie der Strömungsstutzen 8 bilden ein gemeinsames, einteiliges Kunststoff-Bauteil, welches beispielsweise im Spritzgießverfahren oder nach einer anderen Methode wie zum Beispiel Tiefziehen hergestellt wird. Gegebenenfalls befinden sich im Zwischenraum zwischen den beiden parallelen Einzelscheiben 6 und 7 zusätzliche Verbindungsstege, über die die beiden Einzelscheiben aneinander abgestützt sind und die die Stabilität der Deckelscheibe 3 erheblich erhöhen.

Der zentrale Stutzen 8, welcher als Bestandteil der Deckelscheibe 3 die beiden Einzelscheiben 6 und 7 miteinander verbindet, weist ein Anschluss-Innengewinde 9 auf, über das die Deckelscheibe 3 und damit auch die gesamte Filtereinrichtung 1 an ein Bauteil der Brennkraftmaschine angeschlossen werden kann. Zugleich fungiert der Strömungsstutzen 8 als Abströmöffnung, die mit der Reinseite 13 des Filterelementes 4 kommuniziert und über die die gereinigte Flüssigkeit axial aus der Filtereinrichtung 1 abgeleitet wird. Der Strömungsstutzen 8 ragt axial über die Unterseite der unteren, dem Filterelement 4 unmittelbar zugewandten Scheibe 7 über und ein Stück weit in den zylindrischen Innenraum des Filterelementes 4 - die Reinseite 13 - ein.

Die untere Einzelscheibe 7 ist zweckmäßig direkt mit der Stirnseite des Filterelementes 4 verbunden, was beispielsweise im Wege des Verschweißens oder Verklebens mit der Stirnseite des Filterelementes erreicht wird. Auf diese Weise bildet die untere Einzelscheibe 7 den stirnseitigen Abschluss des Filterelementes und sorgt einerseits für Stabilität im Filterelement und andererseits für eine Separierung von Rein- und Rohseite.

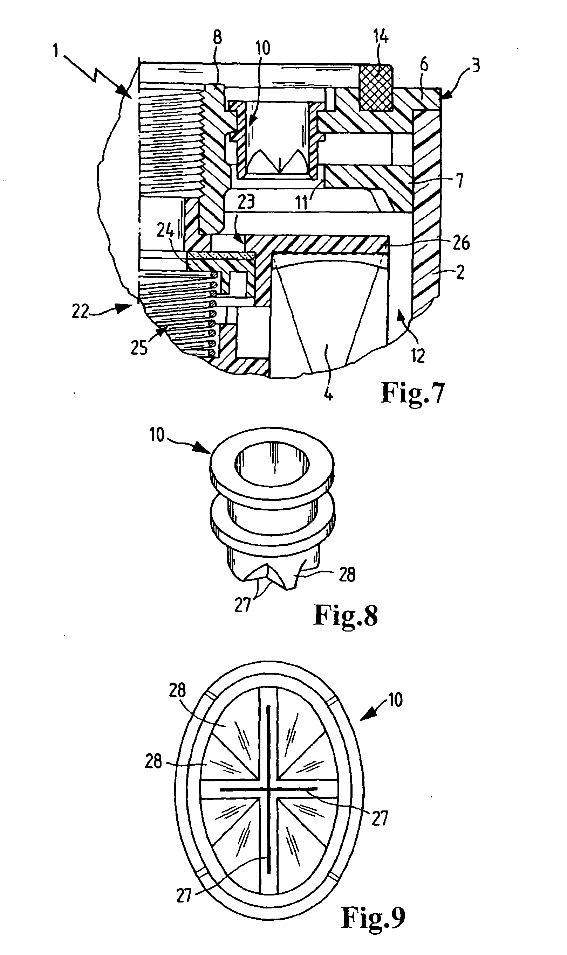

In die obere, dem Filterelement 4 abgewandte Einzelscheibe 6 sind Einströmöffnungen eingebracht, in die Rücklaufsperrventile 10 eingesetzt sind. Diese Rücklaufsperrventile 10 sind beispielsweise als Schnabelventile ausgebildet, die im Detail in den Fig. 8 und 9 dargestellt sind. Die zu reinigende Flüssigkeit wird über die Rücklaufsperrventile 10 zunächst in den Zwischenraum zwischen den beiden Einzelscheiben 6 und 7 eingeleitet, wobei die Rücklaufsperrventile 10 beim Ausbau des Filterelements über Kopf ein Auslaufen der Flüssigkeit bzw. bei abgestelltem Motor ein Leerlaufen des Filters verhindern. Aus dem Zwischenraum zwischen den Einzelscheiben 6 und 7 strömt Flüssigkeit über Durchströmöffnungen 11 in der unteren, dem Filterelement 4 unmittelbar zugewandten Einzelscheibe 7 in die Rohseite 12 ein, die als Ringspalt zwischen der Innenwandung des Filtergehäuses 2 und der Außenseite des Filterelementes 4 ausgebildet ist. Nach dem Durchströmen des Filterelementes 4 in Radialrichtung von außen nach innen wird die gereinigte Flüssigkeit im zentralen, zylindrischen Innenraum (Reinseite 13) gesammelt und axial über den Strömungsstutzen 8 der Deckelscheibe 3 abgeleitet.

Auf der Oberseite der oberen Einzelscheibe 6 der Deckelscheibe 3 ist ein Dichtring 14 in einer hierfür vorgesehenen Aufnahmenut in der Einzelscheibe 6 eingesetzt. Der Dichtring 14 sorgt für eine strömungsdichte Anbindung der Filtereinrichtung 1 an ein Bauelement der Brennkraftmaschine, an das die Filtereinrichtung angeschlossen wird.

Im unteren, dem Boden des Filtergehäuses 2 zugewandten Bereich der Filtereinrichtung ist das Filterelement 4 von einer stirnseitigen Endscheibe 15 abgedichtet. Diese Endscheibe 15, die sich auf der der Deckelscheibe 3 gegenüberliegenden Stirnseite des Filterelementes befindet, besitzt einen erhabenen, topfförmigen Befestigungsstutzen 16, der von unten in den Reinraum 13 des Filterelementes 4 einragt. Die Außenseite des sich über die Ebene der Endscheibe 15 erhebenden Befestigungsstutzens 16 ist von einem Dichtschlauch 17 umgriffen, der die Funktion eines Überströmventiles hat. In die axial sich erstreckenden Wandungen des Befestigungsstutzens 16 sind Ausnehmungen 18 eingebracht, die von dem Dichtschlauch 17 überdeckt werden und im Regelfall die Ausnehmungen 18 strömungsdicht verschließen. Falls der Druck auf der Rohseite 12 jedoch einen Grenzwert übersteigt und insbesondere höher ist als der Druck auf der Reinseite 13, strömt die gereinigte Flüssigkeit über den Boden des Filtergehäuses 2 von unten in die Ausnehmung im Befestigungsstutzen 16 und beaufschlagt über die Ausnehmungen 18 die Innenseite des Dichtschlauches 17, wodurch der Dichtschlauch radial aufgeweitet wird und die ungereinigte Flüssigkeit unmittelbar über die Ausnehmungen 18 von der Rohseite 12 zur Reinseite 13 übertreten kann. Mit nachlassendem Druck werden die Ausnehmungen 18 von der Eigenspannung im Dichtschlauch 17 wieder strömungsdicht verschlossen. Der Dichtschlauch 17 vereint in einem Bauteil die Funktionen eines Ventilkörpers und einer den Ventilkörper in Schließposition beaufschlagenden Ventilfeder.

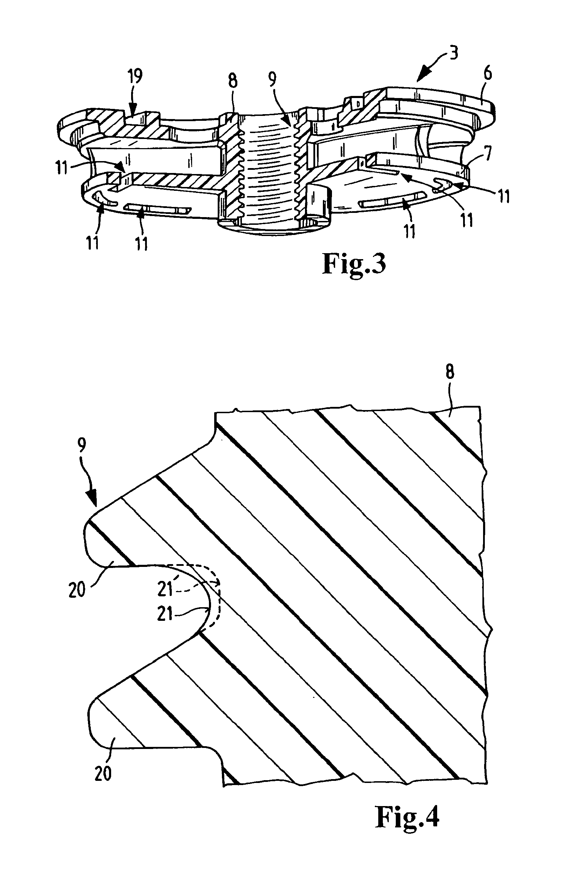

In Fig. 3 ist die Deckelscheibe 3 in Einzeldarstellung gezeigt. Zu erkennen ist, dass die Durchströmöffnungen 11 in der unteren Einzelscheibe 7 als Langlöcher ausgeführt sind, die sich in Umfangsrichtung der Deckelscheibe erstrecken. Die Durchströmöffnungen 11 befinden sich im radial außen liegenden Bereich der Einzelscheibe 7 und kommunizieren im eingebauten Zustand der Deckelscheibe 3 unmittelbar mit der Rohseite 12 des Filterelementes.

Auf der Oberseite der oberen Einzelscheibe 6 befindet sich einteilig ausgebildet mit dem Deckelscheibe die Aufnahmenut 19 für den einzusetzenden Dichtring.

Fig. 4 stellt einen Schnitt in vergrößerter Darstellung durch das Anschluss-Innengewinde 9 im Strömungsstutzen 8 dar. Die Querschnittsgeometrie zwischen zwei benachbarten Zähnen 20 des Gewindes ist elliptisch ausgebildet und folgt dem mit der durchgezogenen Linie 21 dargestellten Verlauf. Zum Vergleich ist eine herkömmliche, aus dem Stand der Technik bekannte Sägezahngeometrie mit strichlierter Linie 21' dargestellt. Der Vorteil der elliptischen Geometrie gemäß durchgezogener Linie 21 liegt in den herabgesetzten Spannungen, was den Einsatz eines verhältnismäßig weichen Materials wie Kunststoff ermöglicht.

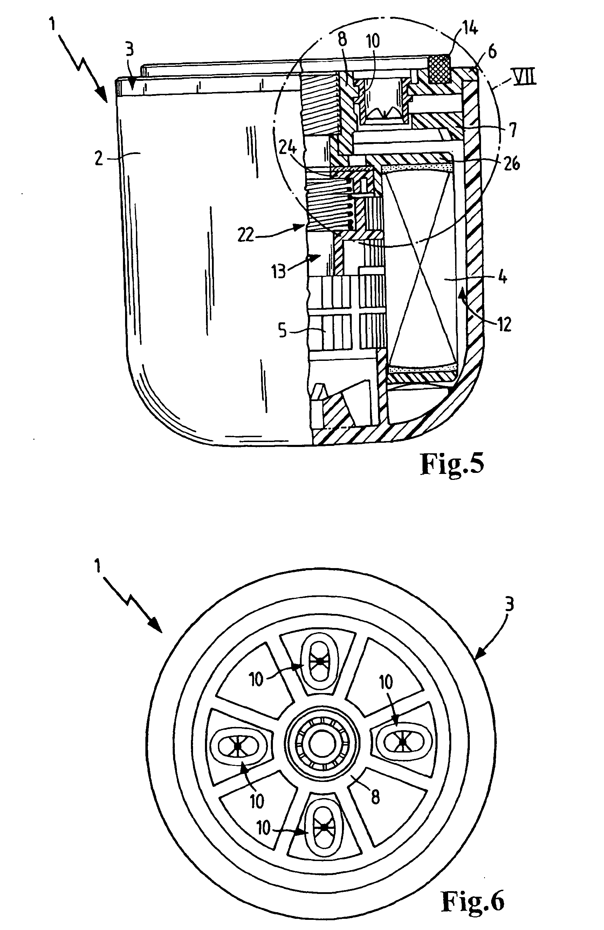

In den Fig. 5 bis 7 ist ein weiteres Ausführungsbeispiel für eine Filtereinrichtung 1 zur Flüssigkeitsfilterung dargestellt. Die Filtereinrichtung weist ein Überströmventil 22 im oberen, der Deckelscheibe 3 zugewandten Bereich des Filterelementes 4 auf, das unter regulären Bedingungen eine Überströmöffnung 23 zwischen der Rohseite 12 und der Reinseite 13 des Filterelementes verschließt. Diese Überströmöffnung 23 ist in eine Stirnscheibe 26 eingebracht, die fest mit der oberen Stirnseite des Filterelementes 4 verbunden ist. Die Stirnscheibe 26 ist als separates, von der Deckelscheibe 3 unabhängiges Bauteil ausgeführt, jedoch mit der Deckelscheibe verbunden. Im Rahmen der Erfindung kann es aber auch zweckmäßig sein, die untere Einzelscheibe 7 der Deckelscheibe 3 unmittelbar mit der Stirnseite des Filterelementes 4 zu verbinden, wobei in diesem Fall die Überströmöffnung 23 in die Einzelscheibe 7 eingebracht wäre. Darüber hinaus besteht auch die Möglichkeit, die Stirnscheibe 26 mit der Deckelscheibe 3 als einteiliges Kunststoff-Bauteil auszuführen.

Das Überströmventil 22 umfasst eine Verschlussscheibe 24, die die Funktion des Ventilkörpers übernimmt und auf der Reinseite 13 des Filterelementes axial verschieblich angeordnet ist und von einer Ventilfeder 25 in ihre Schließposition beaufschlagt wird, in der die Verschlussscheibe 24 dichtend an der Überströmöffnung 23 in der Stirnscheibe 26 anliegt. Die Ventilfeder 25 stützt sich an dem Stützkörper 5 des Filterelementes 4 ab.

Die zu reinigende Flüssigkeit wird über die Rücklaufsperrventile 10 in das Innere der Filtereinrichtung eingeleitet; es sind insgesamt vier Rücklaufsperrventile 10 in der Deckelscheibe 3 angeordnet. Übersteigt der Druck der zugeführten Flüssigkeit einen Grenzwert, wird die Verschlussscheibe 24 gegen die Kraft der Ventilfeder 25 aus ihrer Schließposition axial nach unten verschoben, wodurch ein Strömungsweg über die Überströmöffnung 23 unmittelbar von der Rohseite 12 zur Reinseite 13 freigegeben wird. Nach erfolgtem Druckabbau reicht die Kraft der Ventilfeder 25 wieder aus, die Verschlussscheibe 24 gegen den anliegenden Druck auf der Rohseite 12 nach oben in die Schließposition zu verstellen, in der die Überströmöffnung 23 strömungsdicht verschlossen ist. Zweckmäßig bestehen alle Komponenten des Überströmventils 22 aus Kunststoff, also insbesondere die Verschlussscheibe 24 und auch die Ventilfeder 25.

In den Fig. 8 und 9 ist ein Ausführungsbeispiel für ein als Schnabelventil ausgeführtes Rücklaufsperrventil 10 dargestellt, das in Öffnungen in der Deckelscheibe 3 eingesetzt ist und über das die zu reinigende Flüssigkeit der Filtereinrichtung 1 zugeführt wird. Auch das Schnabelventil 10 ist vollständig aus Kunststoff gefertigt. Auf der Abströmseite weist das Schnabelventil 10 zwei über Kreuz angeordnete Strömungsschlitze 27 auf, welche unter Normalbedingungen geöffnet sind, sodass die zu reinigende Flüssigkeit das Schnabelventil 10 passieren kann. Aufgrund der Nachgiebigkeit des Kunststoffmaterials des Schnabelventils 10 können die die Strömungsschlitze 27 begrenzenden Wandabschnitte 28 des Rücklaufsperrventils bei einem anliegenden, von außen auf die Wandabschnitte 28 wirkenden Druck, welcher einen Grenzwert übersteigt, zusammengepresst werden, wodurch die Strömungsschlitze 27 geschlossen werden und ein Passieren der Flüssigkeit durch das Rücklaufsperrventil 10 unmöglich wird. Mit nachlassendem äußeren Druck öffnen sich die Strömungsschlitze 27 aufgrund der Eigenelastizität des Materials des Rücklaufsperrventils 10 wieder, sodass ein Durchströmen durch das Rücklaufsperrventil wieder ermöglicht wird.

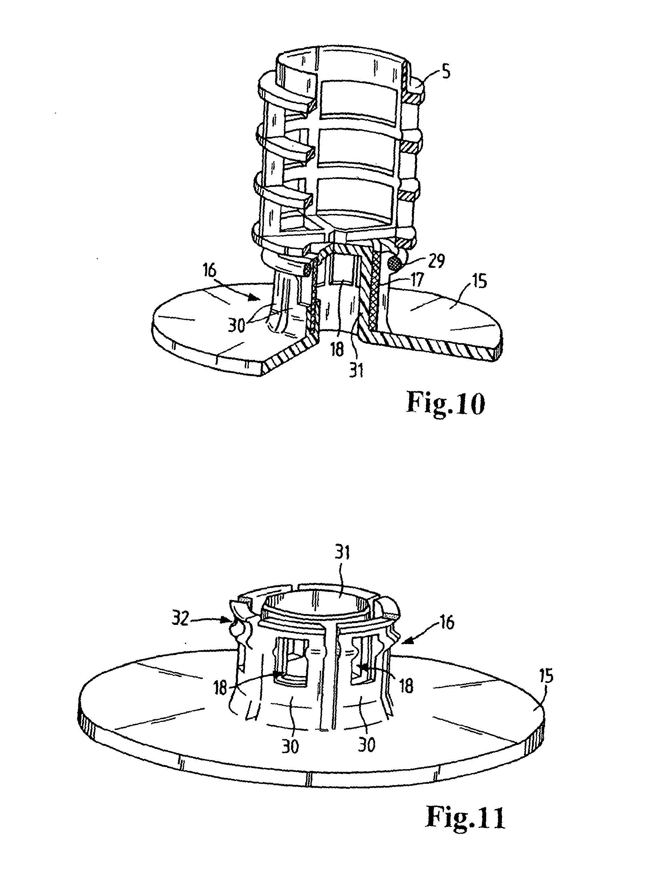

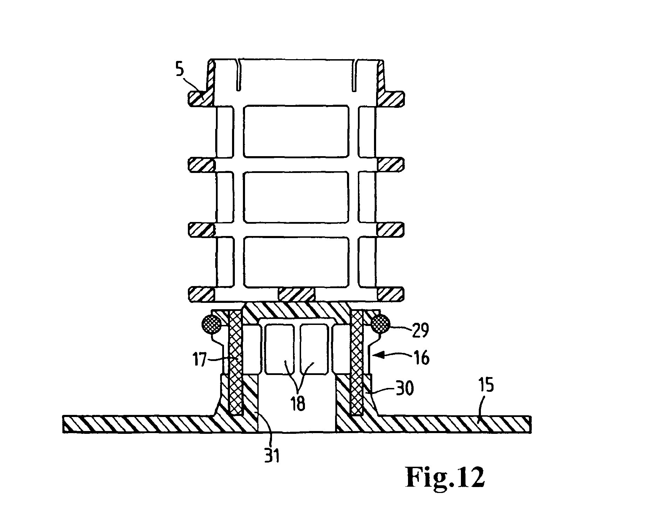

In den Fig. 10 bis 12 ist ein Ausführungsbeispiel für ein Überströmventil zwischen Roh- und Reinseite im unteren, bodennahen Abschnitt des Filterelementes dargestellt. Von der Endscheibe 15, welche bodennah im Aufnahmeraum des Filtergehäuses 2 angeordnet ist, erhebt sich der zentrale Befestigungsstutzen 16, um den als Ventilkörper ein zylindrischer Dichtschlauch 17 gelegt wird. Der zentrale Befestigungsstutzen 16 umfasst vertikal aufragende, voneinander separierte Wandabschnitte 30, die kreisförmig um eine zentrale Erhebung 31 angeordnet sind. Die einzelnen Wandabschnitte 30 sind einteilig mit der aus Kunststoff bestehenden Endscheibe 15 ausgebildet und können elastisch federn. Dies ermöglicht es, einen Dichtring 29 in eine umlaufende Nut 32 einzusetzen, die auf der Außenseite der Wandabschnitte 30 gebildet ist.

Der den Ventilkörper bildende Dichtschlauch 17 wird in den Zwischenraum zwischen der zentralen, topfförmigen Erhebung 31 und den die Erhebung einschließenden Wandabschnitten 30 eingesetzt. Der Dichtschlauch verschließt hierbei Ausnehmungen 18, die in die Wandungen der zentralen Erhebung 31 eingebracht sind.

Die ungereinigte Flüssigkeit auf der Rohseite des Filterelementes tritt von unten axial in den Innenraum der zentralen Erhebung 31 ein und beaufschlagt den Dichtschlauch 17 von innen mit Druck radial nach außen. Bei Überschreiten eines Druckgrenzwertes auf der Rohseite weitet sich der Dichtschlauch 17 so weit auf, dass eine Strömungsverbindung über die Ausnehmungen 18 zwischen Roh- und Reinseite hergestellt wird, sodass die ungereinigte Flüssigkeit unmittelbar zur Reinseite übertreten kann. Mit Abbau des Drucks auf der Rohseite schließt das Überströmventil durch Zusammenziehen des Dichtschlauches wieder selbständig.

Sämtliche Bestandteile des Überströmventils (mit Ausnahme des Dichtschlauches) bestehen aus Kunststoff, was die Recyclingfähigkeit erheblich verbessert.

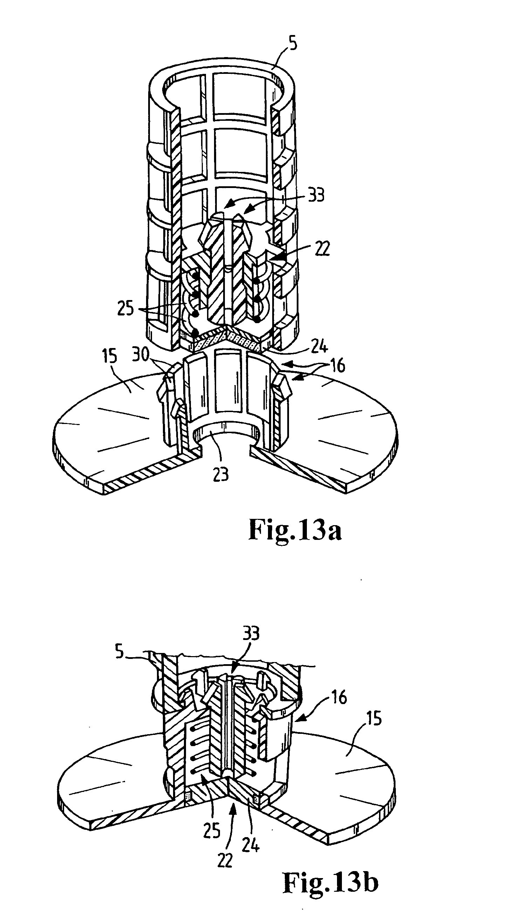

In Fig. 13a ist ein Überströmventil 22 im Bodenbereich des Filterelements in einer weiteren Ausgestaltung dargestellt. Auch in dieser Ausführung bestehen sämtliche Bestandteile des Filterelementes aus Kunststoff. Der Ventilkörper des Überströmventils 22 wird von einer Verschlussscheibe 24 gebildet, die einteilig mit Schnapphaken 33 ausgeführt ist, welche im Innenraum des Stützkörpers 5 an einer Arretieröffnung des Stützkörpers verliersicher arretiert, jedoch axial verschieblich gehalten sind. Dadurch kann die Verschlussscheibe 24 axial zwischen einer Schließposition, in der eine Überströmöffnung 23 in der bodenseitigen Endscheibe 15 strömungsdicht verschlossen ist, und einer Öffnungsstellung verschoben werden. Die Verschlussscheibe 24 wird von einer Ventilfeder 25 in ihre Schließposition kraftbeaufschlagt.

Unter regulären Bedingungen ist die Überströmöffnung 23, welche von den einzelnen Wandabschnitten 30 des Befestigungsstutzens 16 eingerahmt ist, von der Verschlussscheibe 24 strömungsdicht verschlossen. Falls der Druck auf der Rohseite einen Grenzwert übersteigt, gelangt die ungereinigte Flüssigkeit von unten über die Überströmöffnung 23 in Kontakt mit der Verschlussscheibe 24 und beaufschlagt diese mit einem öffnenden Druck entgegen der Kraft der Ventilfeder 25, wodurch die Verschlussscheibe 24 angehoben und eine Strömungsverbindung zwischen Roh- und Reinseite hergestellt wird. Mit nachlassendem Druck kann die Verschlussscheibe 24 unter der Einwirkung der Ventilfeder 25 wieder die Schließposition einnehmen, in der die Überströmöffnung 23 verschlossen ist.

Das in Fig. 13b dargestellte Überströmventil 22 entspricht in seinem Grundaufbau demjenigen aus Fig. 13a, jedoch mit dem Unterschied, dass die Ventilfeder 25 sowie die Schnapphaken 33 am Ventilkörper sich unmittelbar am Befestigungsstutzen 16 und nicht am Stützkörper 5 des Filterelements abstützen. Der Stützkörper 5 sitzt auf dem Befestigungsstutzen 16 auf, der zweckmäßig einteilig mit der Endscheibe 15 verbunden ist, gegebenenfalls aber auch ein von der Endscheibe 15 unabhängiges Bauteil bilden kann.

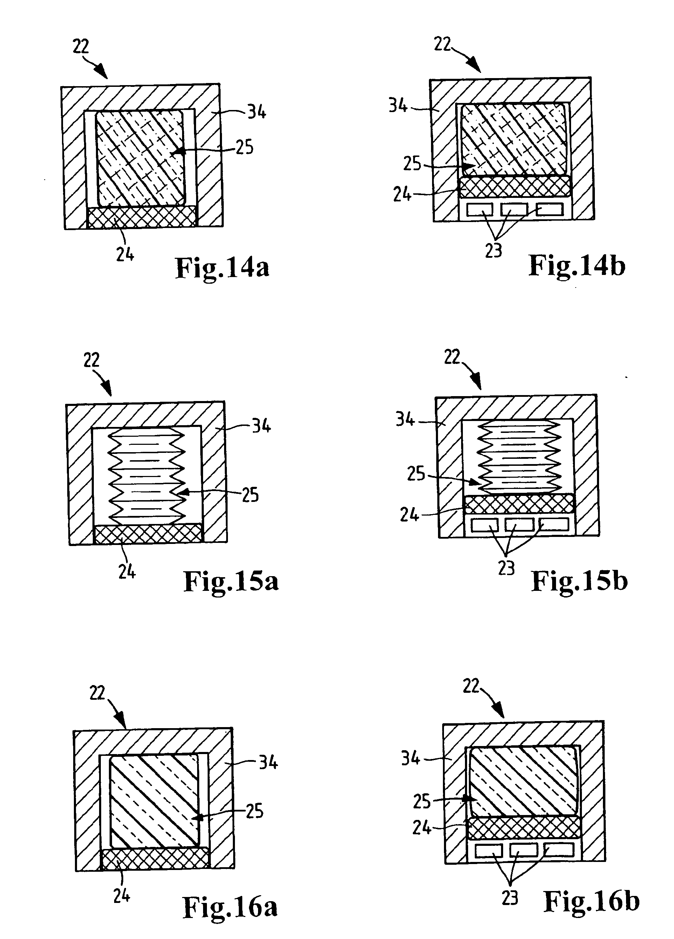

In den Fig. 14a bis 16b sind verschiedene Ausführungsbeispiele für konstruktiv einfach aufgebaute Überströmventile 22 dargestellt, welche in geschlossener Position die Rohseite von der Reinseite im Filterelement separieren und in geöffneter Position einen unmittelbaren Übertritt der ungereinigten Flüssigkeit ermöglichen. In einem Ventilgehäuse 34 ist der als Verschlussscheibe 24 ausgebildete Ventilkörper axial verschieblich angeordnet und an einer Ventilfeder 25 in der Schließposition gehalten. Wirkt auf die Verschlussscheibe 24 von außen eine Kraft entgegen der Federkraft der Ventilfeder 25, so wird die Verschlussscheibe 24 in Richtung des Innenraumes des Ventilgehäuses 34 verschoben, wodurch Überströmöffnungen 23 in der Wandung des Ventilgehäuses 34 freigegeben werden und eine direkte Strömungsverbindung zwischen Roh- und Reinseite des Filterelementes geschaffen wird. In den drei gezeigten Ausführungsbeispielen ist die Ventilfeder 25 jeweils als elastisch federnder Block ausgeführt, wobei in dem Beispiel nach Fig. 14a und 14b die Ventilfeder 25 als Elastomerblock ausgeführt ist, in den Fig. 15a und 15b als Elastomerbalg und in dem Ausführungsbeispiel nach Fig. 16a und 16b als Schaumfederblock, bestehend aus PUR-Schaum oder aus Silikonschaum.

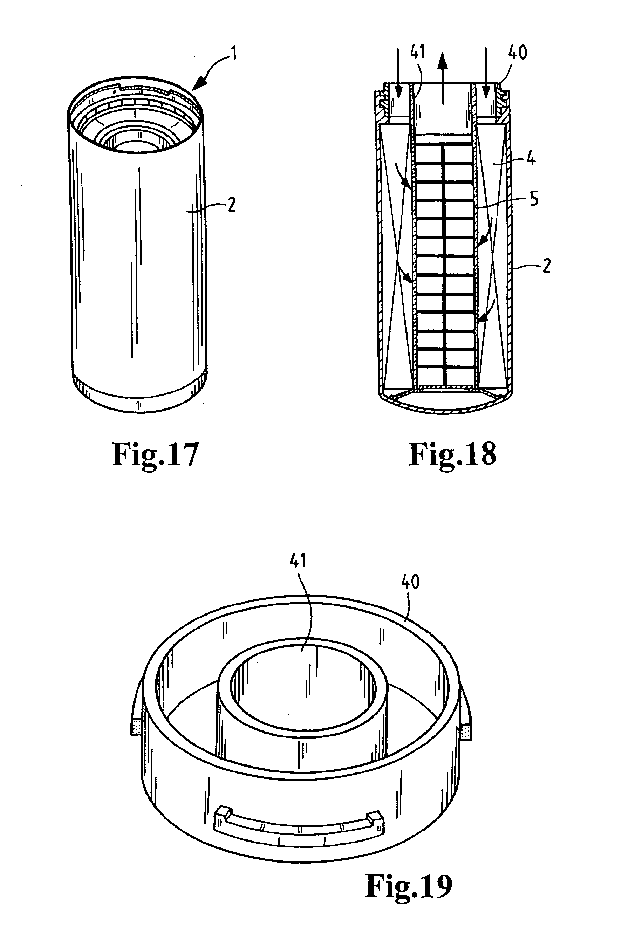

In den Figuren 17 bis 21 ist ein weiteres Ausführungsbeispiel für eine Filtereinrichtung zur Flüssigkeitsfilterung dargestellt. Die Filtereinrichtung 1 weist ein zylindrisches Filtergehäuse 2 auf, in dem das ringförmige Filterelement 4 aufgenommen ist, welches radial von der zu filtrierenden Flüssigkeit durchströmt wird. Hierfür wird die zu reinigende Flüssigkeit, wie in Fig. 18 dargestellt, stirnseitig in das Filtergehäuse 2 eingeleitet. Zur Filtrierung durchströmt die Flüssigkeit das Filterelement 4 radial von außen nach innen und wird anschließend über den Innenraum, der die Reinseite darstellt, axial aus dem Filtergehäuse wieder abgeleitet. Zur Stützung des Filterelementes 4 weist dieses ein Stützgerüst 5 auf. An der axialen Stirnseite, über die die Flüssigkeit ein- bzw. abgeleitet wird, befinden sich konzentrisch angeordnete Anschlussringe 40 und 41, die den Reinraum von der Rohseite separieren. Der Raum zwischen den Anschlussringen 40 und 41 kennzeichnet die Rohseite, der Innenraum innerhalb des kleineren Anschlussringes 41 die Reinseite.

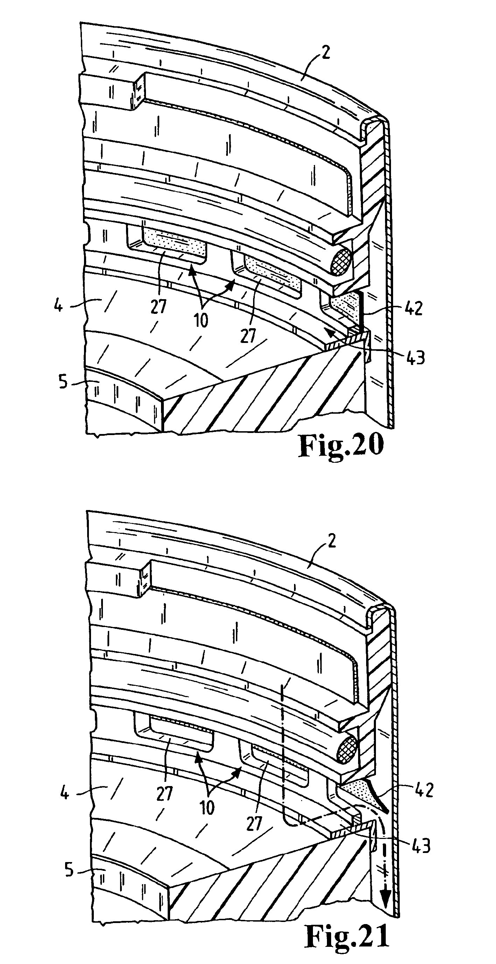

Wie der detaillierten Darstellung der Figuren 20 und 21 zu entnehmen, ist an der axialen Stirnseite, über die die Flüssigkeit zugeführt bzw. abgeleitet wird, am Filterelement 4 ein radial außen liegender Stützring 43 vorgesehen, in den radiale Strömungsaustrittsöffnungen 27 eingebracht sind, welche gleichmäßig über den Umfang des Stützringes verteilt angeordnet sind. Auf der radialen Außenseite sind diese Strömungsöffnungen 27 von einem Dichtschlauch 42 abgedeckt, der aus einem flexiblen, elastischen Material besteht und unter Eigenspannung auf die radiale Außenseite des Stützringes 43 zur Abdeckung der Strömungsöffnungen 27 gelegt ist. Der Stützring 43 bildet gemeinsam mit dem Dichtschlauch 42 ein als Schlauchventil ausgebildetes Rücklaufsperrventil 10, das bei einer entsprechenden Druckdifferenz zwischen radialer Innenseite und Außenseite am Dichtschlauch 42 in die in Fig. 21 dargestellte Öffnungsposition überführt wird, bei der zumindest Teilabschnitte des Dichtschlauches 42 aus der dichtend an den Strömungsaustrittsöffnungen 27 anliegenden Sperrposition abgehoben sind, so dass sich eine Strömung radial durch die Strömungsaustrittsöffnungen 27 ausbilden kann. Der auf der Innenseite anliegende Druck der axial herangeführten, zu reinigenden Flüssigkeit hebt den Dichtschlauch 42 radial aus der Dichtposition ab, so dass die Strömungsaustrittsöffnungen 27 freigegeben werden. Sobald der Differenzdruck zwischen Innenseite und Außenseite am Dichtschlauch unter einen Grenzwert fällt, der maßgebend durch die Eigenelastizität des Dichtschlauches bestimmt wird, nimmt der Dichtschlauch wieder seine die Strömungsaustrittsöffnungen verschließende Dichtstellung ein.

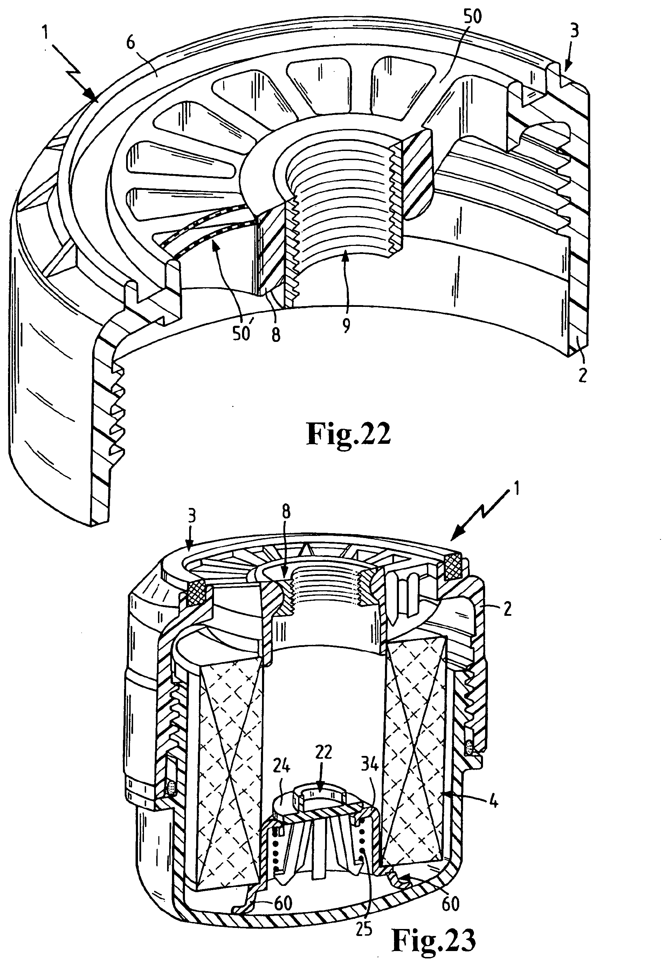

In Fig. 22 ist ein weiteres Ausführungsbeispiel einer Filtereinrichtung 1 zur Flüssigkeitsfilterung dargestellt. Das topfförmige Filtergehäuse 2, in welchem das Filterelement aufgenommen ist, ist von einem äußeren Deckel 6 stirnseitig verschlossen, in den ein zentrischer Strömungsstutzen 8 mit Innengewinde 9 integriert ist. Zwischen dem Strömungsstutzen 8 und einem radial außen liegenden Rand der Einzelscheibe 6 erstrecken sich radial verlaufende Speichen 50. Vorgesehen sind eine Vielzahl derartiger Speichen, die in regelmäßigem Abstand über den Umfang der Einzelscheibe 6 verteilt angeordnet sind. Die Speichen 50 sind in sich geradlinig ausgeführt und erstrecken sich zweckmäßig ausschließlich in Radialrichtung. Wie mit gestrichelter Ausführung dargestellt, kann es aber auch zweckmäßig sein, gekrümmte Speichen 50' vorzusehen, die zusätzlich zu der radialen Komponente auch noch eine Komponente in Umfangsrichtung aufweisen. Darüber hinaus sind auch geradlinig ausgebildete Speichen denkbar, die winklig zur Radialrichtung verlaufen.

In den Figuren 23 bis 25 ist noch ein weiteres Ausführungsbeispiel für eine Filtereinrichtung zur Flüssigkeitsfilterung dargestellt. Das Filterelement 4 ist ringförmig ausgebildet, wobei die Innenseite die Reinseite und die radiale Außenseite die Rohseite des Filters darstellt. Im Bereich einer axialen Stirnseite des Filterelementes 4 ist ein Überström- bzw. Umgehungsventil 22 angeordnet, welches zweckmäßig vollständig aus Kunststoff gefertigt ist und ein Ventilgehäuse 34 aufweist, welches in den axialen Innenraum des Filterelementes 4 im Bereich einer Stirnseite einsetzbar ist. Im Ventilgehäuse 34 ist eine Ventilfeder 25 aufgenommen, die als Spiralfeder ausgeführt ist und insbesondere eine Druckkraft ausübt. Diese Ventilfeder 25 beaufschlagt eine als Ventilkörper fungierende Verschlussscheibe 24 in die Schließposition. Übersteigt der Flüssigkeitsdruck auf der Rohseite einen Grenzwert, wird die Verschlussscheibe 24 gegen die Kraft der Ventilfeder 25 geöffnet, so dass ein direkter Strömungsdurchtritt zwischen Roh- und Reinseite gegeben ist.

Im Bereich der axialen Stirnseite sind am Ventilgehäuse 34 mehrere, die axiale Stirnseite des Filterelementes 4 überragende Stützfüße 60 angeordnet, die zweckmäßig einteilig mit dem Ventilgehäuse 34 ausgebildet sind. Diese Stützfüße 60 haben die Funktion eines elastisch federnden Stützmittels, wodurch beim Einführen des Filterelementes 4 in das Filtergehäuse 2 ein axialer Toleranzausgleich beim Aufsetzen auf den Boden des Filtergehäuses erreicht wird. Des Weiteren wird über die Stützfüße 60 das Filterelement im Gehäuse zentriert und geführt. Außerdem wird sichergestellt, dass das Filterelement nicht versehentlich verkehrt herum eingebaut werden kann.

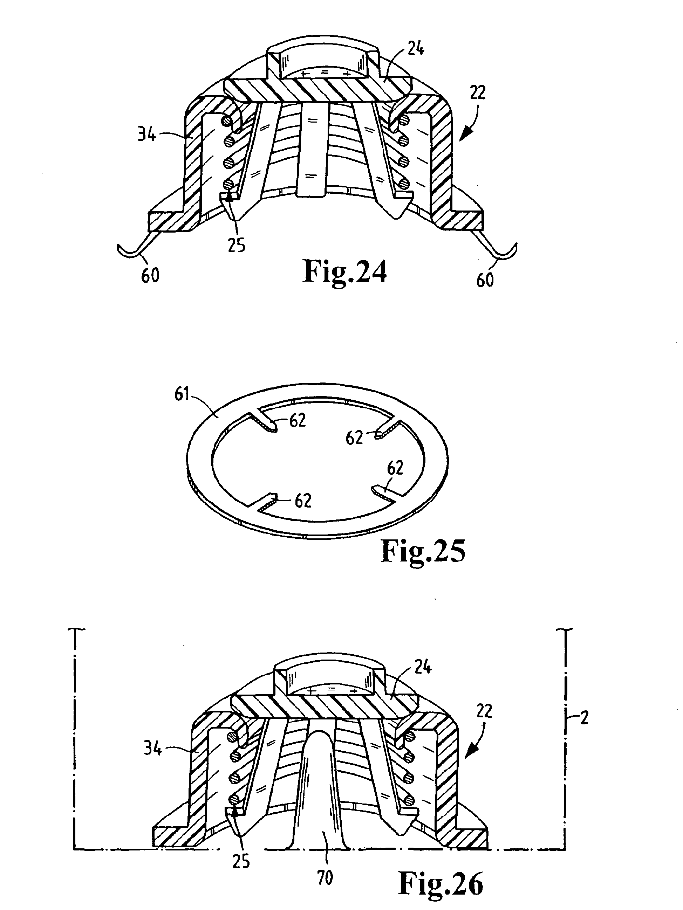

Zweckmäßig sind drei oder vier derartige Stützfüße 60 an der Stirnseite des Ventilgehäuses 34 gleichmäßig über den Umfang verteilt angeordnet. Wie Fig. 25 zu entnehmen, kann es aber auch zweckmäßig sein, anstelle der Stützfüße einen Stützring 61 an der axialen Stirnseite des Ventilgehäuses 34 zu befestigen, wobei der Stützring 61 Stützelemente 62 aufweist, die als radial nach innen und axial gegenüber der Ebene des Stützringes 61 abstehende, dornartige Stützfedern ausgebildet sind.

In Fig. 26 ist ein weiteres Ausführungsbeispiel dargestellt, bei dem ein Umgehungsventil 22 mit einem Dorn 70 am Boden des topfförmigen Filtergehäuses 2 zusammenwirkt. Das Umgehungsventil 22 zwischen der Roh- und der Reinseite des in das Filtergehäuse einzusetzenden Filterelementes weist eine den Ventilkörper bildende Verschlussscheibe 24 auf, die von einer Ventilfeder 25 in ihre Dichtposition am Ventilgehäuse 34 kraftbeaufschlagt wird. Das Ventilgehäuse 34 ist etwa topfförmig ausgebildet, wobei die offene Topfseite dem Boden des Filtergehäuses zugewandt ist. Die Verschlussscheibe 24 liegt auf Abstand zum Boden des Filtergehäuses, die seitlichen Wandungen des Ventilgehäuses sowie die Verschlussscheibe 24 begrenzen einen Aufnahmeraum, in den der Pin bzw. Dorn 70 einragt, welcher fest am Boden des Filtergehäuses verankert ist.

Dieser Dorn 70 hat die Aufgabe, den Ventilkörper des Umgehungsventils für den Fall in die Öffnungsstellung zu versetzen, dass ein falsches Filterelement einschließlich Umgehungsventil in das Filtergehäuse eingesetzt wird, so dass trotz des nicht hierfür hergerichteten Filterelementes eine unmittelbare Strömungsverbindung zwischen Roh- und Reinseite hergestellt und somit ein Durchfluss der Flüssigkeit durch die Filtereinrichtung gewährleistet ist. Insbesondere bei einem Einsatz als Kraftstofffilter wird auf diese Weise eine Notversorgung der Brennkraftmaschine mit Kraftstoff sichergestellt, auch wenn versehentlich ein falsches Filterelement eingesetzt worden ist.

Bei korrekt verwendetem Filterelement und Umgehungsventil kommt dagegen dem Dorn nur eine Zentrierungsfunktion für die Zentrierung des Filterelementes im Filtertopf zu, nicht jedoch eine Öffnungsfunktion für das Umgehungsventil. In diesem Fall ragt der Dorn in die Ausnehmung im Ventilgehäuse 34 ein, ohne jedoch die Verschlussscheibe 24 zu beaufschlagen und in die Öffnungsposition zu verstellen. Die Verschlussscheibe 24 liegt bei korrektem Einsetzen bzw. dem Einsetzen des korrekten Filterelementes auch in ihrer Schließposition mit ausreichendem Abstand zur Spitze des Dorns.

Ein weiterer Vorteil dieses Dorns liegt darin, dass auch bei Verwendung eines hierfür vorgesehenen Filterelementes ein versehentliches Einsetzen dieses Filterelementes in falscher Lage verhindert wird. Falls das Filterelement in unbeabsichtigter Weise verkehrt herum in den Filtertopf eingesetzt wird, gelangt die stirnseitige Deckelscheibe am Filterelement in Kontakt mit dem Dorn 70, so dass das Filterelement nicht vollständig in den Filtertopf einführbar ist, was beim Montieren sofort bemerkt wird.

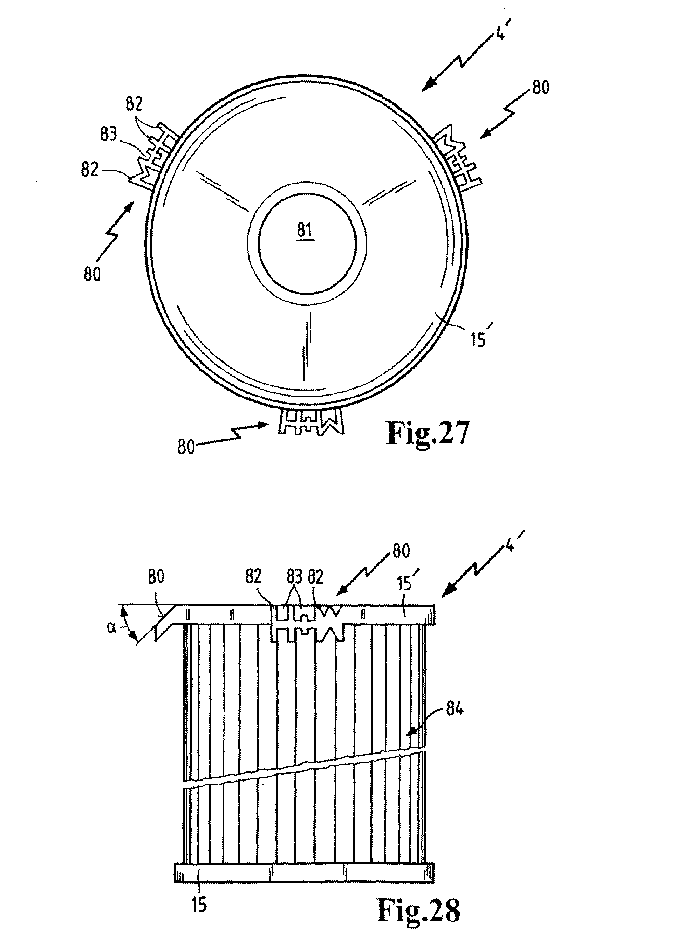

In Figur 27 ist ein Filterelement 4' in der Draufsicht dargestellt. Das Filterelement 4' verfügt über eine obere Endscheibe 15', welche aus einem thermoplastischen Kunststoff gebildet ist. Die Endscheibe 15' ist im Wesentlichen als Kreisringscheibe ausgeführt. Hierbei ist eine zentral angeordnete Öffnung 81 vorgesehen, durch welche das Fluid hindurch strömen kann. Bei anderen Ausführungen kann die Endscheibe 15' auch nur als Kreisscheibe ausgeführt sein. Die Öffnung 81 für das Fluid ist dann auf der gegenüberliegenden Seite angeordnet. Neben der Kreis- bzw. Kreisringform kann die Endscheibe 15' selbstverständlich auch als beliebige andere geometrische Grundform, wie z.B. quadratisch, rechteckig oder vieleckig, insbesondere sechseckig, ausgeführt sein. Die Endscheibe 15' verfügt an ihrem Umfang über drei am Umfang verteilt angeordnete Schlüssel-Strukturen 80. Hierbei ist die Anzahl und Verteilung der Schlüssel-Strukturen 80 am Umfang beliebig. Daher kann auch nur eine einzelne oder mehr als eine Schlüssel-Struktur 80 am Umfang angeordnet sein. Die Schlüssel-Struktur 80 ragt mit ihrer Geometrie über den Außenumfang der Endscheibe 15' hinaus, wobei die Schlüssel-Struktur 80 über unterschiedlich breite Materialstege 82 bzw. Lücken 83 verfügt.

Die Schlüssel-Struktur 80 ist bei diesem Ausführungsbeispiel in Form der Buchstaben "M+H" ausgeführt. Selbstverständlich können alle Buchstaben in beliebiger Reihenfolge und Anzahl zur Bildung der Schlüssel-Struktur 80 kombiniert werden. Vorteilhafterweise sind die Buchstaben derart gewählt, dass sie z.B. ein Firmenlogo oder eine Abkürzung von Firmen- oder Produktnamen darstellen. Die Schlüssel-Struktur 80 kann jedoch auch durch andere Schriftzeichen, wie z.B. japanische bzw. chinesische Schriftzeichen oder arabische bzw. römische Zahlen gebildet werden.

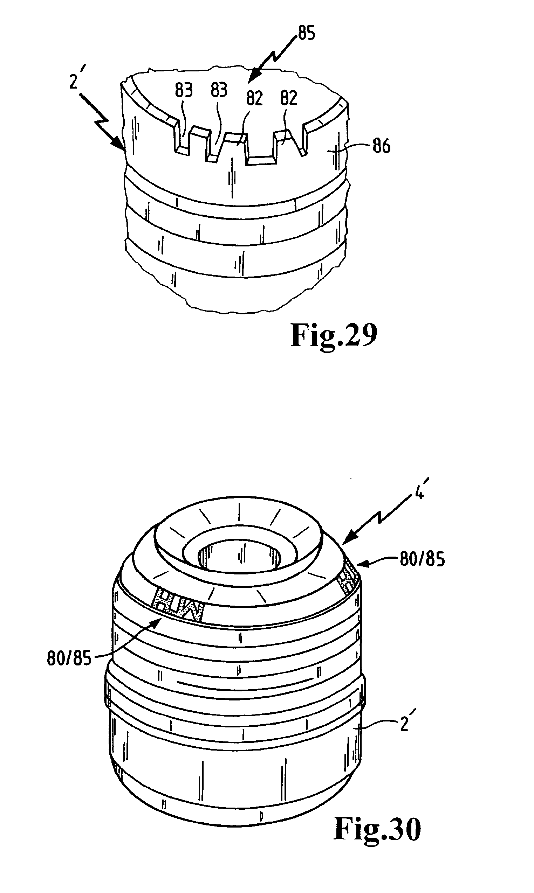

In Figur 28 ist das Filterelement 4' in der Seitenansicht dargestellt. Der Figur 27 entsprechende Bauteile sind mit gleichen Bezugszeichen versehen. Das Filterelement 4 verfügt neben der oberen Endscheibe 15' und der unteren Endscheibe 15 noch über ein zickzackförmig gefaltetes und ringförmig geschlossenes Filtermedium 84. Das Filtermedium 84 ist dichtend mit den Endscheiben 15, 15' verbunden. Bei diesem Ausführungsbeispiel ist die Schlüssel-Struktur 80 mit ihrem radial über die Kreisform der Endscheibe 15' hinausragenden Bereich geneigt zu der Oberfläche der Endscheibe 15' angeordnet. Hierbei beträgt der Neigungswinkel □ der Schlüssel-Struktur 80 ca. 45°. Der Neigungswinkels kann jedoch einen beliebigen Wert zwischen 0° und 90°, vorzugsweise zwischen 30° und 60° einnehmen. Die Schlüssel-Struktur 80 greift in eine Schloss-Struktur 85 ein, wie sie in dem perspektivischen Ausschnitt des Filtergehäuses 2' in Figur 29 dargestellt ist.

Die Schloss-Struktur 85 ist an dem topfförmigen Filtergehäuse 2', welches zur Aufnahme des Filterelementes 4' geeignet ist, angeordnet. Hierbei verfügt die Schloss-Struktur 85 über eine Negativ-Geometrie zu der Schlüssel-Struktur 80, so dass die Materialstege 82 der Schlüssel-Struktur 80 in Lücken 83 der Schloss-Struktur 85 eingreifen. Die Materialstege 82 der Schloss-Struktur 85 greifen in Lücken 83 der Schlüssel-Struktur 80 ein. Die Schloss-Struktur 85 des Filtergehäuses 2' ist bei dieser Ausführung als Einkerbung in der Filtergehäusewand 86 ausgebildet. Die Einkerbungen können sowohl die gesamte Materialstärke der Filtergehäusewand 86 ausnehmen, als auch nur eine teilweise Ausnehmung darstellen. Bei einer teilweisen Ausnehmung verbleibt dann ein Teil der Filtergehäusewand 86, an welchen sich dann die Schlüssel-Geometrie 80 anfügt. Bei anderen Ausführungsbeispielen kann die Schloss-Struktur 85 in einem Winkel zur Filtergehäusewand 86 angeordnet sein und in Einkerbungen in der Endscheibe 15' eingreifen. Durch das Zusammenwirken der Schlüssel-Schloss-Strukturen 80, 85 ergänzen sich die Strukturen 80, 85 zu einer Einheit. Das Filterelement 4' kann somit nur in der zulässigen Einbaulage in das Filtergehäuse eingesetzt werden. Ein Einsetzen von unzulässigen Filterelementen wird somit sofort erkennbar bzw. verhindert, wenn das Filterelement 4' nicht vorschriftsmäßig montiert ist. Eine Anordnung der Schlüssel-Struktur 80 an dem Filtergehäuse 2' ist selbstverständlich möglich, wenn die zugehörige Schloss-Struktur 85 an dem Filterelement 4' angeordnet ist.

In Figur 30 ist ein Filterelement 4' gemäß Fig. 28 in montiertem Zustand in einem Filtergehäuse 2' gemäß Fig. 29 dargestellt. Die Strukturen 80, 85 des Filterelements 4' und des Filtergehäuse 2' ergänzen sich derart, dass das Filterelement 4' verdrehsicher und exakt in dem Filtergehäuse 2' positioniert ist. Diese vormontierte Einheit aus Filterelement 4' und Filtergehäuse 2' kann anschließend in die entsprechende Aufnahme z. B. an einen Filterkopf (nicht dargestellt) oder einen Deckel (nicht dargestellt) eingeschraubt werden. Die beschriebenen Schlüssel-Schloss-Strukturen 80, 85 können beliebig mit den vorstehend beschriebenen Ausführungsbeispielen kombiniert werden und so sinnvolle Ausgestaltungen bilden.

## Patentansprüche

1. Filtereinrichtung, insbesondere zur Flüssigkeitsfilterung in Brennkraftmaschinen, mit einem in ein Filtergehäuse (2) eingesetztes Filterelement (4), wobei das Filtergehäuse (2) von einer Deckelscheibe (3) verschlossen ist und die Deckelscheibe (3) aus zwei Einzelscheiben (6, 7) besteht, die über einen zentralen Strömungsstutzen (8) verbunden sind, wobei die beiden Einzelscheiben (6, 7) und der Strömungsstutzen (8) ein gemeinsames Kunststoffbauteil bilden und zwischen den Einzelscheiben (6, 7) ein Zwischenraum gebildet ist, **dadurch gekennzeichnet, dass** die Einzelscheiben (6, 7) parallel zueinander liegen und eine Einzelscheibe (7) eine Stirnscheibe bildet, die unmittelbar auf der Stirnseite des Filterelements (4) aufsitzt, dass in die dem Filterelement (4) abgewandte Einzelscheibe (6) Einströmöffnungen und in die dem Filterelement (4) unmittelbar zugewandte Einzelscheibe (7) Durchströmöffnungen (11) eingebracht sind, über die die Flüssigkeit zur Rohseite (12) des Filterelements (4) strömt, wobei der zentrale Strömungsstutzen (8) eine Abströmöffnung bildet, die mit der Reinseite (13) des Filterelements (4) kommuniziert und über die die gereinigte Flüssigkeit axial aus der Filtereinrichtung (1) abzuleiten ist, wobei in die dem Filterelement (4) abgewandte Einzelscheibe (6) der Deckelscheibe (3) mindestens ein in Richtung des Filterelements (4) öffnendes Rücklaufsperrventil (10) eingebracht ist.

2. Filtereinrichtung nach Anspruch 1, **dadurch gekennzeichnet, dass** die Einzelscheiben (6, 7) der Deckelscheibe (3) über Verbindungsstege verbunden sind, die einteilig mit der Deckelscheibe (3) ausgebildet sind.

3. Filtereinrichtung nach Anspruch 1 oder 2, **dadurch gekennzeichnet, dass** die Einzelscheibe (7) fest mit der Stirnseite des Filterelements (4) verbunden ist, beispielsweise mittels Verschweißens oder Verklebens.

4. Filtereinrichtung nach einem der Ansprüche 1 bis 3, **dadurch gekennzeichnet, dass** das Rücklaufsperrventil (10) als Schnabelventil ausgeführt ist.

5. Filtereinrichtung nach einem der Ansprüche 1 bis 4, **dadurch gekennzeichnet, dass** in die dem Filterelement (4) benachbarte Einzelscheibe (7) sich in Umfangsrichtung erstreckende, als Langlöcher ausgeführte Durchströmöffnungen (11) eingebracht sind.

6. Filtereinrichtung nach einem der Ansprüche 1 bis 5, **dadurch gekennzeichnet, dass** in eine auf der Stirnseite des Filterelements aufsitzende Stirnscheibe (26) eine Überströmöffnung (23) zwischen Roh- und Reinseite (12, 13) des Filterelements (4) eingebracht ist, wobei ein die Überströmöffnung (23) verschließendes Überströmventil (22) in Öffnungsstellung versetzt wird, falls der Druck auf der Rohseite (12) einen Grenzwert übersteigt.

7. Filtereinrichtung nach einem der Ansprüche 1 bis 6, **dadurch gekennzeichnet, dass** in den zentralen Strömungsstutzen (8) in der Deckelscheibe (3) ein Anschluss-Innengewinde (9) eingebracht ist.

8. Filtereinrichtung nach Anspruch 7, **dadurch gekennzeichnet, dass** das Anschluss-Innengewinde (9) eine elliptische Geometrie aufweist.

9. Filtereinrichtung nach einem der Ansprüche 1 bis 8, **dadurch gekennzeichnet, dass** das Filterelement (4) hohlzylindrisch ausgebildet und in Radialrichtung zu durchströmen ist, wobei der zentrale Strömungsstutzen (8) in der Deckelscheibe (3) mit dem Innenraum des Filterelements (4) kommuniziert.

10. Filtereinrichtung nach einem der Ansprüche 1 bis 9, **dadurch gekennzeichnet, dass** zwischen der Rohseite und der Reinseite des Filterelements (4) ein Überströmventil angeordnet ist, das in Öffnungsstellung versetzt wird, falls der Druck der Flüssigkeit auf der Rohseite des Filterelements (4) einen Grenzwert übersteigt.

11. Filtereinrichtung nach Anspruch 10, **dadurch gekennzeichnet, dass** der Ventilkörper des Überströmventils als Dichtschlauch (17) ausgebildet ist, welcher auf einem zylindrischen Trägerkörper zwischen der Roh- und Reinseite aufsitzt, in den Strömungsöffnungen (18) eingebracht sind, wobei der Dichtschlauch (17) auf der Reinseite des Trägerkörpers angeordnet ist.

12. Filtereinrichtung nach Anspruch 10, **dadurch gekennzeichnet, dass** das Überströmventil (22) einen verstellbaren Ventilkörper (24) umfasst, der von einer Ventilfeder (25) in einen Ventilsitz gedrückt wird, wobei der Ventilkörper (24) und die Ventilfeder (25) aus Kunststoff gefertigt sind.

13. Filtereinrichtung nach Anspruch 12, **dadurch gekennzeichnet, dass** die Ventilfeder (25) des Überströmventils (22), die den Ventilkörper (24) in die Schließstellung beaufschlagt, als elastisch federnder Block ausgeführt ist, der vorzugsweise als Elastomerblock, als Elastomerbalg oder als Schaumfederblock bestehend aus PUR-Schaum oder aus Silikonschaum ausgebildet ist.

14. Filtereinrichtung nach einem der Ansprüche 1 bis 13, **dadurch gekennzeichnet, dass** eine Einzelscheibe (6) eine Mehrzahl von Speichen (50, 50') aufweist, die sich vom zentralen Strömungsstutzen (8) radial nach außen erstrecken.

15. Filtereinrichtung nach Anspruch 14, **dadurch gekennzeichnet, dass** die Speichen (50') in der Ebene der Einzelscheibe (6) gekrümmt verlaufen und zusätzlich zur radialen Komponente eine Komponente in Umfangsrichtung aufweisen.

## Claims

1. Filtering device, in particular for filtering fluids in internal combustion engines, with a filter element (4) inserted into a filter housing (2), the filter housing (2) being closed by a cover disk (3) and the cover disk (3) consisting of two individual disks (6, 7) connected via a central flow connection (8), both individual disks (6, 7) and the flow connection (8) forming a common plastic component and an intermediate space being formed between the individual disks (6, 7), **characterized in that** the individual disks (6, 7) are in parallel to each other and that an individual disk (7) forms a front disk which is placed directly on the front side of the filter element (4), that in the individual disk (6) facing away from the filter element (4) inflow openings and in the individual disk (7) directly facing the filter element (4) flow-through openings (11) are realized via which the fluid flows to the raw side (12) of the filter element (4), the central flow connection (8) forming an outflow opening which communicates with the clean side (13) of the filter element (4) and via which the cleaned fluid has to be discharged axially out of the filtering device (1), at least one anti-drain valve (10) that opens in the direction of the filter element (4) being inserted into the individual disk (6) of the cover disk (3), the individual disk (6) facing away from the filter element (4).

2. Filtering device according to claim 1, **characterized in that** the individual disks (6, 7) of the cover disk (3) are connected via connecting bars which are designed as one-piece with the cover disk (3).

3. Filtering device according to claim 1 or 2, **characterized in that** the individual disk (7) is firmly connected with the front end of the filter element (4), for example by means of welding or gluing.

4. Filtering device according to one of the claims 1 to 3, **characterized in that** the anti-drain valve (10) is designed as duck bill valve.

5. Filtering device according to one of the claims 1 to 4, **characterized in that** flow-through openings (11) designed as slotted holes and extending in circumferential direction are integrated in the individual disk (7) adjacent to the filter element (4).

6. Filtering device according to one of the claims 1 to 5, **characterized in that** in one front disk (26) placed onto the front end of the filter element (4) an overflow opening (23) is realized between raw side and clean side (12, 13) of the filter element (4), an overflow valve (22) closing the overflow opening (23) is put into opening position, if the pressure at the raw side (12) exceeds a threshold value.

7. Filtering device according to one of the claims 1 to 6, **characterized in that** a connecting female thread (9) is realized in the central flow connection (8) in the cover disk (3).

8. Filtering device according to claim 7, **characterized in that** the connecting female thread (9) has an elliptic geometry.

9. Filtering device according to one of the claims 1 to 8, **characterized in that** the filter element (4) is designed hollow cylindrical and to be flowed through in radial direction, the central flow connection (8) in the cover disk (3) communicating with the interior area of the filter element (4).

10. Filtering device according to one of the claims 1 to 9, **characterized in that** between the raw side and the clean side of the filter element (4) an overflow valve is disposed which is put into opening position if the pressure of the fluid exceeds a threshold value at the raw side of the filter element (4).

11. Filtering device according to claim 10, **characterized in that** the valve body of the overflow valve is designed as sealing hose (17) which is placed onto a cylindrical supporting body between raw side and clean side into which flow openings (18) are realized, the sealing hose (17) being disposed at the clean side of the supporting body.

12. Filtering device according to claim 10, **characterized in that** the overflow valve (22) comprises an adjustable valve body (24) which is pushed into a valve seat by a valve spring (25), the valve body (24) and the valve spring (25) being made of plastic.

13. Filtering device according to claim 12, **characterized in that** the valve spring (25) of the overflow valve (22) which forces the valve body (24) into the closing position is designed as an elastically resilient block which is preferably designed as elastomer block, as elastomer bellows or as foam spring block consisting either of PUR foam or silicone foam.

14. Filtering device according to one of the claims 1 to 13, **characterized in that** an individual disk (6) features a multitude of spokes (50, 50') which extend radially outwards from the central flow connection (8).

15. Filtering device according to claim 14, **characterized in that** the spokes (50') describe a curved path in the plane of the individual disk (6) and feature in addition to the radial component a component in circumferential direction.

## Revendications

1. Dispositif de filtration, notamment pour la filtration de liquides dans des moteurs à combustion interne, avec un élément filtrant (4) inséré dans un boîtier de filtre (2), le boîtier de filtre (2) étant obturé par un disque-couvercle (3) et le disque-couvercle (3) se composant de deux disques individuels (6, 7) reliés par un raccord d'écoulement central (8), les deux disques individuels (6, 7) et le raccord d'écoulement (8) formant une pièce commune en plastique et un interstice étant formé entre les disques individuels (6, 7), **caractérisé en ce que** les disques individuels (6, 7) sont parallèles l'un à l'autre et qu'un disque individuel (7) forme un disque frontal appliqué directement sur la face frontale de l'élément filtrant (4), **en ce que** des orifices d'admission sont intégrés dans le disque individuel (6) opposé à l'élément filtrant (4) et des orifices de passage (11) sont intégrés dans le disque individuel (7) orienté directement vers l'élément filtrant (4), orifices par l'intermédiaire desquels le liquide coule vers le côté brut (12) de l'élément filtrant (4), le raccord d'écoulement central (8) formant un orifice d'écoulement qui communique avec le côté filtré (13) de l'élément filtrant (4) et par l'intermédiaire duquel le liquide nettoyé peut être évacué en sens axial du dispositif de filtration (1), au moins une soupape anti-retour (10) s'ouvrant en direction de l'élément filtrant (4) étant insérée dans le disque individuel (6) du disque-couvercle (3), le disque individuel (6) étant opposé à l'élément filtrant (4).

2. Dispositif de filtration selon la revendication 1, **caractérisé en ce que** les disques individuels (6, 7) du disque-couvercle (3) sont reliés par des nervures de jonction formées en un bloc avec le disque-couvercle (3).

3. Dispositif de filtration selon la revendication 1 ou 2, **caractérisé en ce que** le disque individuel (7) est relié de manière fixe à la face frontale de l'élément filtrant (4), par exemple par soudage ou collage.

4. Dispositif de filtration selon l'une des revendications 1 à 3, **caractérisé en ce que** la soupape anti-retour (10) est exécutée en tant que soupape à bec.

5. Dispositif de filtration selon l'une des revendications 1 à 4, **caractérisé en ce que** des orifices de passage (11) s'étendant en sens circonférentiel et exécutés en trous oblongs sont intégrés au disque individuel (7) voisin de l'élément filtrant (4).

6. Dispositif de filtration selon l'une des revendications 1 à 5, **caractérisé en ce que**, dans un disque frontal (26) appliqué sur la face frontale de l'élément filtrant (4), un orifice de trop-plein (23) est placé entre le côté brut et le côté filtré (12, 13) de l'élément filtrant (4), une soupape de trop-plein (22) obturant l'orifice de trop-plein (23) étant décalée en position d'ouverture si la pression du côté brut (12) dépasse une valeur limite.

7. Dispositif de filtration selon l'une des revendications 1 à 6, **caractérisé en ce qu'**un filet intérieur de raccordement (9) est monté dans le raccord d'écoulement central (8) du disque-couvercle (3).

8. Dispositif de filtration selon la revendication 7, **caractérisé en ce que** le filet intérieur de raccordement (9) a une forme elliptique.

9. Dispositif de filtration selon l'une des revendications 1 à 8, **caractérisé en ce que** l'élément filtrant (4) est exécuté en tant que cylindre creux et peut être traversé en sens radial, le raccord d'écoulement central (8) du disque-couvercle (3) communiquant avec l'espace intérieur de l'élément filtrant (4).

10. Dispositif de filtration selon l'une des revendications 1 à 9, **caractérisé en ce qu'**une soupape de trop-plein est disposée entre le côté brut et le côté filtré de l'élément filtrant (4), cette soupape étant décalée en position d'ouverture si la pression du liquide du côté brut de l'élément filtrant (4) dépasse une valeur limite.

11. Dispositif de filtration selon la revendication 10, **caractérisé en ce que** le corps de la soupape de trop-plein est exécuté en tant que tuyau d'étanchéité (17) appliqué sur un corps support cylindrique entre le côté brut et le côté filtré et dans lequel sont placés des orifices d'écoulement (18), le tuyau d'étanchéité (17) étant disposé du côté filtré du corps support.

12. Dispositif de filtration selon la revendication 10, **caractérisé en ce que** la soupape de trop-plein (22) comprend un corps de soupape (24) réglable qui est pressé par un ressort de soupape (25) dans un siège de soupape, le corps de soupape (24) et le ressort de soupape (25) étant fabriqués en matière plastique.

13. Dispositif de filtration selon la revendication 12, **caractérisé en ce que** le ressort de soupape (25) de la soupape de trop-plein (22), lequel amène le corps de soupape (24) en position de fermeture, est exécuté en tant que bloc élastique réalisé de préférence comme bloc élastomère, comme soufflet élastomère ou comme bloc élastique fait de mousse PUR ou de mousse silicone.

14. Dispositif de filtration selon l'une des revendications 1 à 13, **caractérisé en ce qu'**un disque individuel (6) présente plusieurs rayons (50, 50') qui s'étendent en sens radial du raccord d'écoulement central (8) vers l'extérieur.

15. Dispositif de filtration selon la revendication 14, **caractérisé en ce que** les rayons (50') évoluent en courbe dans le plan du disque individuel (6) et présentent, en plus du composant radial, un composant en sens circonférentiel.
